(19) Europäisches Patentamt
European Patent Office
Office européen des brevets

(11) EP 0 546 869 B1

# (12) EUROPEAN PATENT SPECIFICATION

(45) Date of publication and mention
of the grant of the patent:
**17.09.1997 Bulletin 1997/38**

(51) Int Cl.6: **G01J 3/10**, G01N 21/35

(21) Application number: **92311406.0**

(22) Date of filing: **14.12.1992**

(54) **Spectro-specific diffractive elements as sources of radiation**

Spektrospezifische Beugungselemente als Strahlungsquellen

Eléments diffractifs spectrospécifiques comme sources de rayonnement

(84) Designated Contracting States:
**DE FR NL**

(30) Priority: **13.12.1991 GB 9126549**

(43) Date of publication of application:
**16.06.1993 Bulletin 1993/24**

(73) Proprietor: **BG Public Limited Company
London SW1V 3JL (GB)**

(72) Inventors:
- **Wykes, John Stanton
  Chellaston, Derbyshire DE7 1RG (GB)**
- **Willett, Martin John
  Burton-upon-Trent Staffordshire DE15 9FH (GB)**

(74) Representative: **Kinrade, John
British Gas plc,
Intellectual Property Department,
59 Bryanston Street
London W1A 2AZ (GB)**

(56) References cited:
EP-A- 0 110 201     US-A- 3 741 648
US-A- 4 274 063

- **DATABASE INSPEC INSTITUTE OF
  ELECTRICAL ENGINEERS, Stevenage GB,
  Inspec No. 1491817; I.V. VOVK : 'Sound
  diffraction by a grating of gas-filled hollow
  elastic bars'*abstract* & AKUSTICHESKII
  ZHURNAL, JULY-AUG. 1979, USSR,
  VOL.25,NR.4, PAGE(S) 502-506,ISSN 0320-7919.**

**Description**

This invention concerns a method of producing a light beam having a wavelength spectrum with the characteristics of an absorption spectrum of a molecular species or mixture of molecular species of interest, and also concerns using the beam in a method of optically sensing a gaseous molecular species or mixture of species in a gaseous sample.

Gas detection sensors are commonly used in many industrial fields. In particular, in the mining industry gas sensors are required to determine safe concentration levels of methane and other gases in working areas. In many countries legislation provides that the concentration levels of certain gases, particularly methane, must not exceed certain limits. Working areas must be evacuated if these limits are exceeded and ventilation increased in order that safe working conditions can be reestablished. As maintenance of high levels of ventilation is costly, there is a need to have a cheap, accurate and reliable gas sensor, so that gas levels can be effectively monitored. Gas detectors conventionally used in coal mines suffer from the disadvantage that they require frequent calibration and are sensitive to a variety of 'poisoning' vapours. Similar requirements exist in oil production platforms and other industrial work places where explosive, noxious or poisonous gases are present.

Every gaseous atomic or molecular species is characterised by an optical absorption spectrum; that is, each species absorbs optical radiation (including ir and uv) to varying degrees at some wavelengths, whilst not at all at other wavelengths. This concept may be used in the sensing of a specific gaseous atomic or molecular species by the observation of its interaction with incident optical radiation. This interaction can be efficiently and inexpensively promoted for some atomic species since optical sources having the correct spectral properties can be obtained in the form of vapour discharge lamps wherein the desired atomic species is made to fluoresce by electron impact excitation. These types of sources are not available for molecular species, however, since the species cannot be efficiently excited by electron impact.

Thus, the spectral properties of the sources employed for molecular gas detection usually possess a broad-band spectrum chosen to overlap the molecular absorption band of interest. This is normally arranged by use of a very broad-band source in conjunction with an appropriately chosen interference filter or, if available in the wavelength band of interest, by light emitting diodes (LEDs). However, in the case of molecular species such as $CH_4$, $CO_2$ and CO, which have distinct line spectra, the use of such broad-band sources is rather inefficient. This is due to the full width at half maximum (FWHM) of the individual molecular absorption lines being very much narrower than the spectral width of such sources so that little of the source light is at the correct frequency for absorption.

The spectral efficiency, r, of an optical gas-sensing radiation source is defined here as the fraction of emitted photons lying within one FWHM of the centre of an absorption line of a species of interest and is a prime measure of the source quality. The emission spectrum of a species of interest, even if it is composed solely of well separated Lorentzian features, will, however, only have an r value of about 0.7. The relative spectral efficiency, R, can be taken as a quality parameter and is defined as the ratio of the r value of the source to that of the species spectrum itself. Broad-band sources in common use typically have R values below $10^{-2}$.

In standard gas-sensing systems, in which the fractional attenuation of the source radiation after transmission through a gas mixture is measured to determine the species concentration, it is not desirable that all photons of the correct frequency actually interact with the gas since the aim is to make the probability of interaction linearly (or at least approximately linearly) dependent upon the magnitude of the concentration. Thus the fractional attenuation of the received intensity is often significantly less than R. At such low values small system defects (which also affect the received intensity) can become significant as performance-limiting features.

A source with a very narrow spectrum such as a laser can have R values greater than unity but the high coherence of such radiation can cause problems with speckle effects and modal noise. Laser sources also tend to be expensive. The ideal source of radiation is the emission of the molecular lines themselves since then spectral efficiency would be high (R=1) and the photon would be as incoherent as possible, consistent with this efficiency. However, previous attempts to increase the spectral efficiency of broad-band sources using comb-filter approaches have not so far been very successful and are not capable of approaching the above criteria due to the irregular spacing of the lines in molecular spectra.

Document EP-A-0 110 201 describes an apparatus for providing radiation of controlled spectral composition. It comprises a set of radiation sources each emitting a quasi-monochromatic radiation; the sources may be operated at the same time. The radiation sources illuminate a dipsersing element, such as a grating or a prism. An exit slit is provided for the diffracted light.

Document US-A-4 274 063 describes an infrared spectral light source employing gas discharge which is adapted to produce spectral radiation at selected, sharply defined, spontaneous emission frequencies. This known lamp is intended for gas detection of a molecular gas.

Document US-A-3 741 648 describes the use of an ultrasonic diffraction grating in a gaseous medium for diffracting a high power laser beam. The diffraction grating is formed by regular gas density variations caused by two ultrasonic transducers positioned opposing each other.

One object of the invention is to provide a method of producing a light beam having a wavelength spectrum resembling the absorption spectrum of a molecular species or mixture of molecular species of interest. Another aspect of the invention is to provide a method of optically sensing a gaseous molecular species or mixture of species.

According to the invention a method of producing a light beam having a wavelength spectrum with the characteristics of an absorption spectrum of a molecular species or mixture of molecular species of interest <u>characterised by</u> the steps of:

illuminating with a broad-band optical source (42) a diffractive element (10) whereby light of wavelengths absorbed by said molecular species is diffracted, the diffractive element (10) being a cavity having a plane incident surface containing a gaseous molecular species having an optical absorption spectrum within a wavelength range of interest, arranged in a spatially-varying profile within the element in a direction parallel to the plane incident surface of the element; and

selecting the resulting diffracted beam from an appropriate portion of the far-field radiation pattern.

The beam may be selected by spatial filter means, e.g. by a pin-hole in a screen or by an optical fibre placed to intercept the far-field radiation pattern. This pattern may be brought closer to the diffractive element by a lens. The diffractive element is preferably illuminated by light from the broad-band light source collimated by means of a lens.

The profile may be maintained by an array of cells or tubes, some of which contain the molecular species of interest, or by a standing pressure wave, within a single cavity, preferably created by an ultrasonic transducer. The characteristics of the output beam may be varied by the application of a variable magnetic or electric field across the device. It is also possible to vary the temperature and/or pressure and/ or concentration of the gas. Peltier devices can efficiently be employed for varying the temperature.

This method of producing a light beam having a wavelength spectrum of a molecular species or mixture of species may advantageously be used in a method of optically sensing gaseous species in a gaseous sample wherein such a light beam is directed through a sample of gas under interrogation and the attenuation of the light beam after passing through the sample is observed. The concentration of the molecular species may be determined by measurement of the degree of attenuation of the light beam.

By utilising reference methods and switching between two or more outputs of the diffracted light source by mechanical, optical or other means, it is also possible to distinguish between the effect of several molecular species in a sample cell. By mounting the diffractive element on oscillatable or rotatable means, the level of resemblance with a desired molecular species may be varied and may be used in combination with several spatial filters, each spatial filter comprising a set of apertures. Advantageously, the signal and reference channels are both provided by one spatial filter. By changing the gaseous species within the cells or by using different gases in different cells, together with the use of several sets of apertures, a number of molecular species may be detected.

In order to make a more compact apparatus, a reflective element placed behind the diffractive element may be utilised so that light is reflected back through the diffractive element wherein a single lens is used both to collimate light from the source and to focus the diffracted radiation on the spatial filter. Another method of increasing the effective path length of a diffractive element for a given thickness is to provide reflective inter-cell walls and to illuminate the diffractive element with non-normal light.

The invention will now be further described by way of example, with reference to the accompanying drawings; wherein:-

Figure 1 is a schematic representation of the transmitting face of a diffractive element used in performing the method according to the invention;

Figure 2 is a schematic cross-section of the diffractive element shown in Figure 1;

Figure 3 is a schematic cross-section of another diffractive element used in performing the method according to the invention and usable as a zone plate;

Figure 4 is a schematic cross-section of the diffractive element shown in Figures 1 and 2 and used as a spectro-specific diffraction grating; and

Figure 5 is a schematic representation of an arrangement for producing a beam of monochromatic light by the method according to the invention.

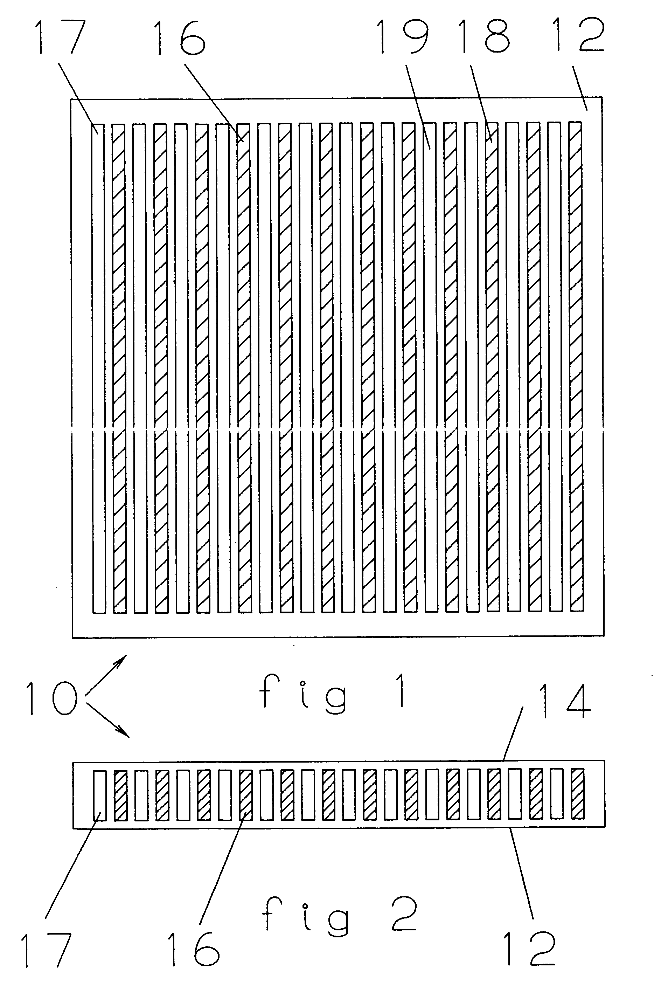

Figures 1 and 2 depict an embodiment of the invention in the form of a spectro-specific diffractive element (10) which is composed of twenty-four elements or cells (16), (17). The cells (16), (17) are radiation absorbing and transmitting in the wavelength region of interest and act as obstacles and apertures respectively, as discussed above. The cells (16), (17) can be arranged as parallel tubes constructed from a material which is substantially transparent to radiation in the wavelength region of interest and containing fluid such as gas. When the gas (18) filling cells (16) is pure methane and the gas (19) filling cells (17) is methane-free air, both at atmospheric pressure, then the embodiment will act as an efficient twelve-element diffraction grating for wavelengths in resonance with the fundamental vibration-rotation transitions of methane. For convenience, the tubes forming the cells (16) are interconnected and the tubes forming the cells (17) are interconnected. Preferably, the cells of the diffracted element are connected to a reservoir of gas which would act as a buffer against variations in gaseous concentrations and would also serve to dissipate heat by convection.

If the material used in the fabrication of the tubes is substantially transparent in the 3-4 $\mu$m wavelength region, e.g. sapphire or calcium fluoride, and the source of radiation emits in that wavelength region, then the device will act as efficient twelve-element diffraction grating to the main peaks of the P-, Q- and R-branches of the $V_3$ transition of methane.

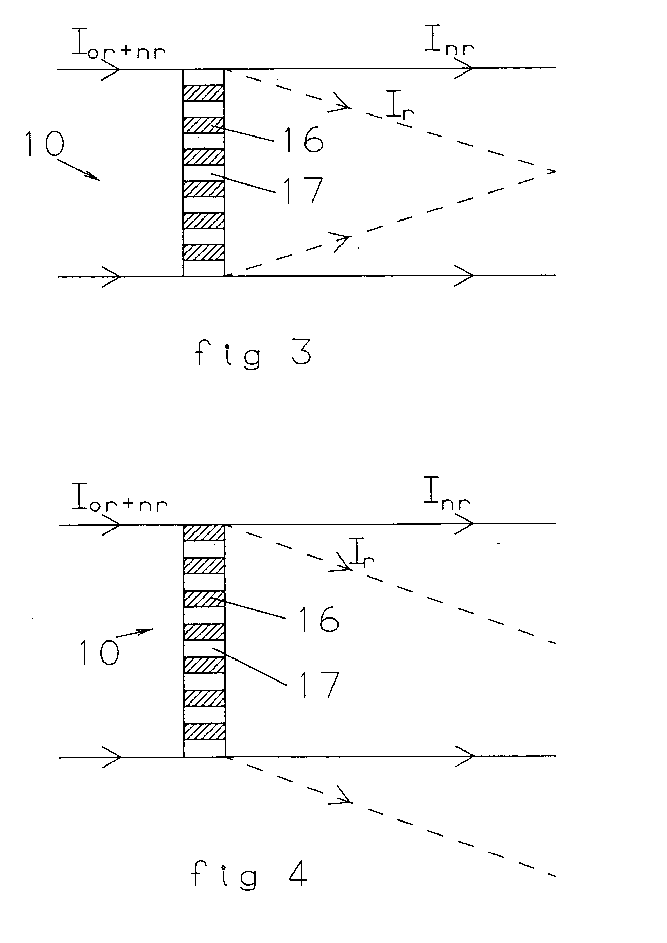

Figure 3 shows an embodiment of the invention with spatially varying cells (16), (17) which are circularly annular cells of varying dimensions to produce a zone plate. Radiation of wavelength resonant with the molecular species contained within the cells (16) is focused by the action of such diffractive elements whilst radiation non-resonant with the molecular species contained within cells (16) is transmitted substantially unaffected through the cells (16). Radiation of all wavelengths may pass through cells (17) substantially unaffected.

Figure 4 shows use of the device shown in Figures 1 and 2 when illuminated by a broad-band light source with the molecular species contained within cells (16) resonating at a wavelength within such a broad band. Radiation non-resonant with the molecular species $i_{nr}$, is transmitted through all elements (17) of the grating substantially unimpeded while radiation resonant with the molecular species contained within cells (16) $i_r$ is absorbed by the species within the cells (16) but is transmitted through the apertures (17). The embodiment therefore acts as a diffractive element only to radiation of wavelength corresponding to the resonant wavelength of the molecular species.

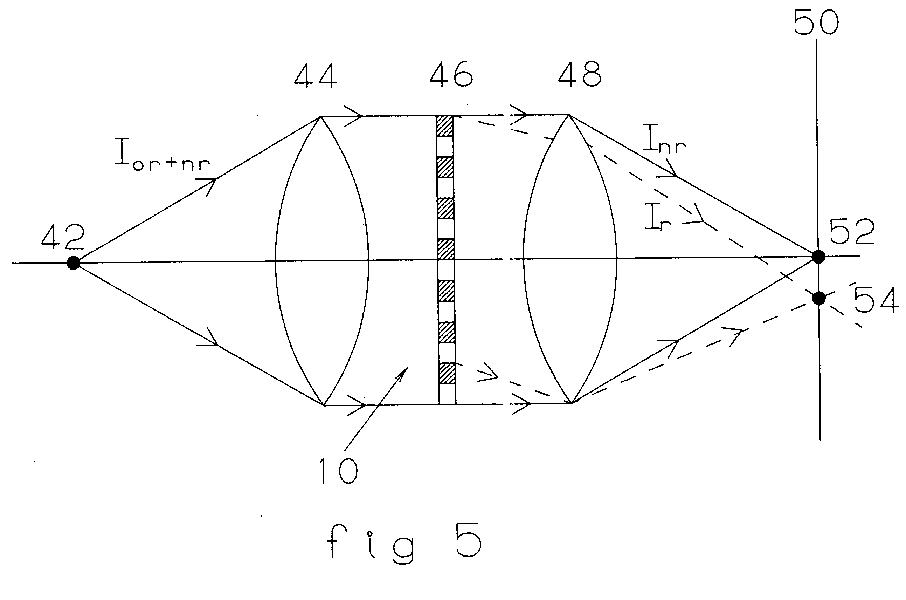

In Figure 5 the incident radiation $I_{o(r+nr)}$ from a broad-band light source (42) comprises wavelengths both resonant and non-resonant to the molecular species and is separated into radiation of intensity $I_r$ resonant with the molecular species by being diffracted and of intensity $I_{nr}$ non-resonant with the molecular species by being transmitted through the diffractive element (10), substantially unaffected. The zero-order diffracted radiation lies in the centre of the screen (50) and cannot be resolved from the non-resonant radiation. However, the first, second and subsequent orders of the resonant wavelength may be distinguished. Only one of the first order diffraction patterns is shown. By separating the resonant wavelength light and allowing only the transmission of the first order diffracted light at aperture (54) through the screen (50), a source of molecular radiation is produced.

Lens (44) serves to collimate light from the broad-band radiation source (42) and lens (48) serves to focus the diffraction pattern which would otherwise be in the far field. The first and subsequent diffraction orders are also focused in the focal plane but are offset from the focus of the non-resonant radiation.

A diffractive element (10) situated in the X,Y plane has an aperture function $A_r$ (X,Y) associated with radiation that is resonant with the molecular species (16) and an aperture function $A_{nr}$ (X,Y) associated with radiation that is not resonant with the molecular species (16). If $A_r$ (X,Y) is judiciously chosen, then regions of the image plane (52) will be such that the intensity of the resonant component is very much greater than that of the non-resonant component even though the reverse is true in the radiation incident upon the diffractive element from the broad-band source. After plane illumination of the diffractive element (10) by the broad-band source (42), the far-field intensity pattern is given by the Fourier transform of the aperture function. Since these are different in the two cases of resonant and non-resonant radiation then two different image patterns are formed by the two different components, i.e.-

$$i_{nr} (X,Y) \propto |F \{A_n (X,Y)\}|^2 \qquad (1)$$

$$i_r (X,Y) \propto |F \{A_r (X,Y)\}|^2 \qquad (2)$$

where F{----} denotes Fourier transform

$A_r$ (X,Y) is the aperture function for the resonant wavelength
$A_{nr}$ (X,Y) is the aperture function for the non-resonant wavelengths
$i_r$ (X,Y) is the image intensity of the resonant wavelength in the image plane, and
$i_{nr}$ (X,Y) is the image intensity of the non-resonant wavelengths in the image plane.

If the intensity incident upon the diffractive element (10) in the two components is denoted by $I_{onr}$ and $I_{or}$ (assumed to be constant over the device), then the ratio of resonant to non-resonant radiation transmitted by a spatial filter of transmission function SF(X,Y) placed in the image plane is given approximately by:-

$$Q = \frac{\int SF(X,Y).I_{or}.i_r(X,Y)dXdY}{\int SF(X,Y).I_{onr}.i_{nr}(X,Y)dXdY} \qquad (3)$$

If there exist domains of the X-Y plane for which

$$I_{or}.i_r \gg I_{onr}.i_{nr} \qquad (4)$$

then the output of the spatial filter (if appropriately chosen to transmit solely in such domains) will be substantially pure molecular radiation, as desired. The aperture containing the spatially varying concentration of the species of interest acts as a spectro-specific diffractive element so that a spatial filter employed to preferentially admit such diffracted radiation acts as a source of radiation with a spectrum concentrated in the positions of the absorption lines of the species.

Although the individual spectral lines of such a source will be in the same position as the species absorptions, the exact line shape will depend upon a variety of factors but primarily the amount of species traversed by the radiation when passing through the diffracting region. In particular, it is possible to produce narrow lines if the pressure of the gas in the cells (16) is kept low and to produce broad lines if the gas pressure is high or the product of concentration and path length traversed is high. The former may be advantageously used in spectroscopic applications, the latter may be advantageously used in the sensing of samples involving high values of the product (concentration x path length). However, if the pressure is taken as ambient and the (concentration x path length) product is appropriately chosen, the spectrum will reasonably closely resemble the emission spectrum. In this case, assuming the non-resonant component has a very much smaller spectral efficiency than that of the resonant radiation, then the system output will have a relative spectral efficiency approximately given by:-

$$R = \frac{Q}{1 + Q} \qquad (5)$$

If Q can be made large then R will approach unity.

Ideally, a spatial filter designed to be transmitting purely in the region of one (or both) of these first-order diffraction patterns would admit solely the diffracted resonant radiation. However, other diffraction effects cause some non-resonant radiation to be also transmitted. Thus, although the non-resonant radiation will be primarily concentrated in the central image of the source, some small percentage will be diffracted by the overall aperture into the resonant first-order diffraction positions (zero-order image spill-over). All radiation will also be diffracted by the inefficient grating formed by the thin walls separating the gas tubes. The first-order peaks of this grating will be at twice the distance from the optic axis but some flux arising from small inter-order diffraction will be present. A very inefficient grating pattern coincident with the resonant grating pattern will be formed from the effect of the difference in refractive indices of the methane and the air upon the transmission loss through the alternate tubes. The exact magnitude of these effects depends upon the size and location of the transmitting aperture(s) in the spatial filter, the size of the source and its images on the spatial filter and the design of the diffractive element.

For the embodiment broadly outlined above an approximate estimate of the spectral efficiency for a point source and spatial filter apertures matched to the Airy disk of the first-order image (around 50 micron diameter for 25 mm optics) yields the following values for non-resonant content as a fraction of the transmitted resonant flux:-

| | |
|---|---|
| Zero-order image spill-over = | 0.03 |
| Wall-grating inter-order diffraction = | 0.03 |
| Differential reflection-loss grating = | 0.02 |
| Non-resonant total = | $\overline{0.08}$ |

Thus the relative spectral efficiency from a wide band incoherent point source with full first-order diffraction throughput of the resonant content is therefore approximately R = 0.92. This is from an incident source of approximately R = 5x10$^{-3}$. (It is desirable that the primary source be moderately well matched to the general positions of the absorptions and in particular that no radiation at or near half the wavelength of interest be present since this would render the wall grating diffraction much more troublesome.) The figures for these three non-resonant flux mechanisms should only be taken as examples for a simple system. The invention allows control of their magnitudes by careful design of the optics using well-known principles; for example, the zero-order image spill-over may be reduced by the use of larger-diameter optics and apodization, the wall grating may be reduced by matching losses through the wall to those through the cavities (by altering material absorptions and interface reflections) and the differential reflection-loss grating may be reduced by careful choice of the relative concentrations/pressures in the two types of cavity.

The situation for finite diameter source is broadly as described above for sources significantly less than 50 μm diameter such as edge emitting diodes (ELEDs). For larger sources, e.g. 100 μm diameter surface emitting diodes the non-resonant contribution grows primarily from an increase in the zero-order image spill-over contribution but even for a 100 μm source R should still approach 0.9. As stated above, the spill-over effect may be reduced by changing the diameter of the optics; increasing the diameter of the optics to 50 mm reduces the effect such that its contribution in the point source case becomes 0.07% through an Airy disc-matched aperture in the output spatial filter.

Simple incandescent bulb sources with effective dimensions of, for example, 500 x 1500 μm would require cylindrical optics for efficient use. The 500 μm source dimension would not allow the first-order diffraction to be fully resolved using the above-described element and so spectral efficiency is degraded. However, provided the output spatial filter is designed to only admit the resolved part of the first-order image, this degradation can be kept low at the expense of some loss of flux throughput efficiency. Similarly, an input spatial filter can be added to reduce the effective source size to resolvable dimensions. Alternatively, a smaller grating period can be used to give a larger-order separation and hence maintain a very high spectral efficiency without loss of throughput; however, manufacturing difficulties may be increased.

Another method of construction may be to use well-known silicon micro-machining techniques. One embodiment utilising these techniques has over one hundred grating periods within the 25 mm diameter and produces R values close to unity even with 1500 mm sources. For efficient operation the silicon should be deeply etched and anti-reflection coated.

In the above example the optical imaging system has unit magnification; this may be altered to suit mainly mechanical constraints such as the size and separation of spatial filter apertures and the length of the system.

The overall length of the system can be reduced by placing a plane mirror immediately after the diffractive element (10) and returning the radiation back through the diffractive element (10) (with thereby increased path length in the gas-containing cavities) and back through the first lens to a focus in the plane of the primary source. For convenience the centre of the diffraction pattern (the zero-order) may be displaced from the primary source itself by a slight tilt of the mirror. Only one lens is required and the overall length of the system is almost halved.

The shape of the species-containing cells or cavities (16) may be advantageously adjusted to give a resonant wavefront amplitude profile whose Fourier transform is further concentrated in the desired positions, according to well-known principles. Diffraction into higher orders can be eliminated by producing a sinusoidal profile.

An alternative, though much less flux efficient, embodiment employs an ultrasonic vibrator which is used to set up a standing pressure wave in the gas. This acts as a grating of the same period as that described above if a frequency of 215 kHz is employed. The diffractive element (10) is now formed as a single gas-containing cavity of appropriate dimension and form such as to be resonant to the ultrasonic frequency. There is no wall grating effect and the fraction of diffracted power appearing in the first-order is enhanced with respect to high orders due to the sinusoidal nature of the pressure modulation. However, since the actual pressure modulation depth is very low for reasonable ultrasonic powers, the overall grating efficiency will be very low and spectral efficiencies will be much lower than quoted above. In principle, much finer gratings can be formed, allowing much wider order separation and hence the use of larger sources, but the higher-frequency ultrasonic radiation required is more heavily absorbed and it becomes very difficult to set up a standing wave in, say, a 25 mm cavity. Reduction of the cavity diameter increases the zero-order image spill-over.

If it is desired to only employ a low concentration of gas or to produce radiation characteristic of a weaker transition such as the $2V_3$ transition of methane, then the optical path-length in the gas must be made greater.

This may be achieved by increasing the depth of the diffractive element (10) and/or employing reflecting inter-cavity walls and a non-normal incident angle, $\emptyset$, so that the incident wave undergoes a number of reflections at opposite walls prior to emergence. It should be noted that the effective grating period is now reduced by a fraction $\sin(\emptyset)$ with consequent greater separation of the diffraction orders.

A reference channel can be achieved in many ways. One simple approach is to provide other apertures in the spatial filter which admit radiation of very much lower spectral efficiency and then to switch between the two. Such an aperture can be situated close enough to the high R aperture to allow their alternate obscuration by a vibrating member such as a shutter. Such a vibrating member might be advantageously powered by the light falling in the zero-order image by the use of well-known conversion techniques. The configuration may be such that the apertures are fully obscured and fully exposed during the shutter vibration for all likely variations in the vibration amplitude (in principle the high and low R apertures can be joined to form one large aperture but then this full switching condition may be harder to satisfy). Alternatively, the shutter can be constructed using well-known electro-optic techniques.

Another method of switching is that of applying a rotational or tilting oscillation of the diffraction aperture about an axis normal to the optic axis and the plane of the aperture, whilst maintaining a fixed spatial filter. The intensity pattern $\{i_r(X,Y)i_{nr}(X,Y)\}$ is thus oscillated across the spatial filter transmitting aperture(s), thereby producing an oscillating value of R synchronous with the diffraction element oscillation.

A system employing two well-matched detectors can operate without any switch if the optics are so arranged that the radiation from one aperture falls mainly on one detector.

An alternative form of referencing is to modulate the gas contained in the diffractive element so that its spectral properties vary. This may be achieved by the variation of any parameter that affects the line-widths or positions, e.g. electric field, magnetic or pressure/temperature/concentration of the gas.

For the ultrasonic grating embodiment described above, referencing is simply achieved by modulation of the ultrasonic transducer.

The technique may also be used to produce separate sources of radiation from several species or mixtures of species by simply having a separate cell (16) for each species or mixture, thereby forming a stack of such cells. Thus, for example, if each cell (16a), (16b), etc. has a different period then the molecular radiation from each will have separate first-order diffraction positions which therefore may be selected by an appropriately constructed spatial filter as described above. Switches may be used to select the type of radiation being output.

Although the invention has been described with particular reference to its use in gas detection methods and apparatus, the invention has wider application. For example, the invention may be employed to provide a standard spectral source for analysis of unknown mixtures. Another variation is to introduce an unknown gas or vapour into an array of cells, as described above, and illuminate the array with broad-band spectral radiation and examine the absorption lines in the resulting diffracted source to determine the nature of the gas or vapour.

## Claims

1. A method of producing a light beam having a wavelength spectrum with the characteristics of an absorption spectrum of a molecular species or mixture of molecular species of interest <u>characterised by</u> the steps of:

   illuminating with a broad-band optical source (42) a diffractive element (10) whereby light of wavelengths absorbed by said molecular species is diffracted, the diffractive element (10) being a cavity having a plane incident surface containing a gaseous molecular species having an optical absorption spectrum within a wavelength range of interest, arranged in a spatially-varying profile within the element in a direction parallel to the plane incident surface of the element; and

   selecting the resulting diffracted beam from an appropriate portion of the far-field radiation pattern.

2. A method according to claim 1, <u>characterised in that</u> the cavity is subdivided to form an array of cells or tubes (16) (17), some of which contain the molecular species of interest, to form the spatically-varying species profile.

3. A method according to claim 1, <u>characterised in that</u> the spatially-varying species profile is maintained by a standing pressure wave created to define an array of radiation blocking and transmitting means.

4. A method according to claim 3, <u>characterised in that</u> the standing pressure wave is produced by an ultrasonic transducer.

5. A method according to any one preceding claim, <u>characterised in that</u> the light beam is selected from the far-field radiation pattern by spatial filter means.

6. A method according to claim 5, <u>characterised in that</u> the spatial filter means comprises a pin-hole in a screen or an optical fibre or fibre bundle.

7. A method according to any one preceding claim, <u>characterised in that</u> light from the broad-band sources (42) is collimated by means of a lens (44) and is directed onto the diffractive element (10).

8. A method according to any one preceding claim, <u>characterised in that</u> the far-field radiation pattern is formed at a relatively short distance away from the diffractive element (10) by means of a focusing lens (48).

9. A method according to any one preceding claim, <u>characterised in that</u> the characteristics of the output beam are varied by the application of a variable magnetic field or electric field across the diffractive element (10) and/or by varying the temperature and/or pressure and/or concentration of the gas or gases.

10. A method of optically sensing a gaseous molecular species or mixture of species in a gaseous sample <u>characterised by</u> the steps of:

    introducing the gas species under interrogation into a sample test cell;

    generating a light beam having a wavelength spectrum characteristics of the molecular gas species or mixture of species, said light beam being produced by the method according to any one of claim 1 to 9;

    directing said light beam through said sample; and

    observing attenuation of the light beam after having passed through the sample.

11. A method according to claim 10, <u>characterised in that</u> the concentration of the molecular species in the sample is determined by measurement of the attenuation of the light beam.

12. A method according to claim 10 or claim 11, <u>characterised in that</u> the generated light beam is switched between at least two outputs from the diffracted light beam by mechanical, optical or electro-optical means in order to distinguish between the effect of a molecular species in a sample cell and other optical effects by reference methods.

13. A method according to any one of claims 10 to 12, further <u>characterised by</u> the steps of varying the intensity and/or the spectral purity of the source radiation.

14. A method according to any one of claims 10 to 13, <u>characterised in that</u> the diffractive element is mounted on oscillatable or rotatable means such that in use the diffraction order selected by the optical filter varies in the level of resemblance with a desired molecular species spectra.

15. A method according to any one of claims 10 to 14 of optically sensing a number of gaseous molecular species, characterised by the use of different gaseous species within the diffractive element.

16. A method of optically sensing a number of gaseous molecular species according to claim 15, further characterised by the use of a number of different diffractive elements (10) together with appropriate spatial filters.

17. A method according to any one of claims 12 to 16, characterised in that the diffracted light is modulated by the application of a variable magnetic electric field across the diffractive element (10) and/or by varying the temperature and/or pressure and/or concentration of the gas or gases.

18. A method according to any one of claims 10 to 17, further characterised by the use of a reflective element behind the diffractive element so that light is reflected back through the diffractive element (10), wherein a single lens is used to collimate light from the source and to focus the diffracted radiation onto the optical filter.

19. A method according to claim 2 or to any preceding one depending on claim 2, characterised in that walls between the individual cells (16, 17) of the diffractive element (10) are reflective such that the effective path-length of light passing through each cell is increased by internal reflections.

**Patentansprüche**

1. Verfahren zur Erzeugung eines Lichtstrahls, der ein Wellenlängenspektrum mit den Charakteristiken eines Absorptionsspektrums einer molekularen Spezies oder eines Gemisches von molekularen Spezies, die von Interesse ist bzw. sind, hat, gekennzeichnet durch folgende Verfahrensschritte:

   - Illuminierung eines Beugungselementes (10) mit einer optischen Breitbandquelle (42), wodurch Licht von Wellenlängen, die durch die molekulare Spezies gebeugt werden, absorbiert wird, wobei das Beugungselement (10) ein Hohlraum mit einer ebenen Einfallsfläche ist, der eine gasförmige molekulare Spezies mit einem optischen Absorptionsspektrum innerhalb eines interessierenden Wellenlängenbereiches enthält, angeordnet in einem räumlich variierenden Profil innerhalb des Elementes in einer Richtung parallel zur ebenen Einfallfläche des Elementes; und
   - Auswahl des resultierenden gebeugten Strahls aus einem entsprechenden Teil des Fernfeld-Strahlungsmusters.

2. Verfahren nach Anspruch 1, dadurch gekennzeichnet, daß der Hohlraum unterteilt ist, um eine Reihe von Zellen oder Röhren (16)(17) zu bilden, von denen einige die interessierende molekulare Spezies enthalten, um das räumlich variierende Speziesprofil zu bilden.

3. Verfahren nach Anspruch 1, dadurch gekennzeichnet, daß das räumlich variierende Speziesprofil durch eine stehende Druckwelle aufrechterhalten wird, die erzeugt wird, um eine Reihe von Strahlungsblockier- und -sendemitteln festzulegen.

4. Verfahren nach Anspruch 3, dadurch gekennzeichnet, daß die stehende Druckwelle durch einen Ultraschallsender erzeugt wird.

5. Verfahren nach einem der vorangehenden Ansprüche, dadurch gekennzeichnet, daß der Lichtstrahl aus dem Fernfeld-Strahlungsmuster durch Raumfiltermittel ausgewählt wird.

6. Verfahren nach Anspruch 5, dadurch gekennzeichnet, daß die Raumfiltermittel ein Nadelloch in einem Schirm oder eine optische Faser oder ein Faserbündel sind.

7. Verfahren nach einem der vorangehenden Ansprüche, dadurch gekennzeichnet, daß das Licht von der Breitbandquelle (42) mittels einer Linse kollimiert und auf das Beugungselement (10) gerichtet wird.

8. Verfahren nach einem der vorangehenden Ansprüche, dadurch gekennzeichnet, daß das Fernfeld-Strahlungsmuster in einer relativ kurzen Entfernung vom Beugungselement (10) mittels einer Fokussierungslinse gebildet wird.

9. Verfahren nach einem der vorangehenden Ansprüche, dadurch gekennzeichnet, daß die Charakteriken des Ausgangsstrahls durch Anlegen eines variablen magnetischen Feldes oder elektrischen Feldes an das Beugungselement (10) und/oder durch Veränderung der Temperatur und/oder des Drucks und/oder der Konzentration des Gases oder der Gase verändert werden.

10. Verfahren zum optischen Aufspüren einer gasförmigen Spezies oder eines Gemisches von Spezies in einer gasförmigen Probe, gekennzeichnet durch folgende Verfahrensschritte:

- Einführen der Gaspezies unter Abfragung in eine Probentestzelle;
- Erzeugung eines Lichtstrahls mit einer Wellenlängenspektrum-Charakteristik der molekularen Gasspezies oder des Gemisches von Spezies, wobei der Lichtstrahl durch das Verfahren nach einem der Ansprüche 1 bis 9 erzeugt wird;
- Leiten des Lichtstrahls durch eine Probe hindurch, und
- Beobachten der Schwächung des Lichtstrahls, der die Probe passiert hat.

11. Verfahren nach Anspruch 10, dadurch gekennzeichnet, daß die Konzentration der molekularen Spezies in der Probe bestimmt wird durch Messen der Schwächung des Lichtstrahls.

12. Verfahren nach Anspruch 10 oder 11, dadurch gekennzeichnet, daß der erzeugte Lichtstrahl zwischen mindestens zwei Ausgängen vom gebeugten Lichtstrahl durch mechanische, optische oder elektro-optische Mittel geschaltet wird, um zwischen dem Effekt eines molekularen Spezies in einer Probenzelle und anderen optischen Effekten durch Referenzverfahren zu unterscheiden.

13. Verfahren nach einem der Ansprüche 10 bis 12, dadurch gekennzeichnet, daß die Intensität und/oder die Spektralreinheit der Quellenstrahlung verändert wird.

14. Verfahren nach einem der Ansprüche 10 bis 13, dadurch gekennzeichnet, daß das Beugungselement an einer oszillierbaren oder rotierbaren Einrichtung angebracht wird, derart, daß bei Gebrauch die Beugungsreihenfolge, die durch das optische Filter ausgewählt wird, im Ähnlichkeitspegel mit einem gewünschten Molekularspezies-Spektrum variiert.

15. Verfahren nach einem der Ansprüche 10 bis 14 zum optischen Aufspüren einer Anzahl von gasförmigen molekularen Spezies, gekennzeichnet durch die Verwendung unterschiedlicher gasförmiger Spezies innerhalb des Beugungselementes.

16. Verfahren zum optischen Aufspüren einer Anzahl von gasförmigen molekularen Spezies nach Anspruch 15, gekennzeichnet durch die Verwendung einer Anzahl unterschiedlicher Beugungselemente (10) zusammen mit entsprechenden Raumfiltern.

17. Verfahren nach einem der Ansprüche 12 bis 16, dadurch gekennzeichnet, daß das gebeugte Licht durch Anlegen eines variablen magnetischen oder elektrischen Feldes am Beugungselement (10) und/oder durch Ändern der Temperatur und/oder des Drucks und/oder der Konzentration des Gases oder der Gase moduliert wird.

18. Verfahren nach einem der Ansprüche 10 bis 17, gekennzeichnet durch die Verwendung eines reflektiven Elementes hinter dem Beugungselement, so daß Licht durch das Beugungselement (10) zurück reflektiert wird, wobei eine einzige Linse verwendet wird, um das Licht von der Quelle her zu kollimieren und die gebeugte Strahlung auf das optische Filter zu fokussieren.

19. Verfahren nach Anspruch 2 oder einem vorhergehenden, auf Anspruch 2 rückbezogenen Anspruch, dadurch gekennzeichnet, daß Wände zwischen den einzelnen Zellen (16,17) des Beugungselementes (10) reflektiv sind, derart, daß die effektive Weglänge des Lichtes, das jede Zelle passiert, durch innere Reflexion vergrößert wird.

## Revendications

1. Procédé pour produire un faisceau lumineux ayant un spectre de longueur d'onde avec les caractéristiques d'un spectre d'absorption d'une espèce moléculaire ou d'un mélange d'espèces moléculaires particulières, caractérisé par les étapes consistant :

à éclairer à l'aide d'une source (42) optique à large bande un élément (10) diffractant de façon que de la lumière à des longueurs d'ondes absorbées par ladite espèce moléculaire soit diffractée, l'élément (10) diffractant étant une cavité ayant une surface d'incidence plane contenant une espèce moléculaire gazeuse ayant un spectre d'absorption optique se situant à l'intérieur d'une gamme de longueur d'ondes particulière, agencée selon un profil variant spatialement à l'intérieur de l'élément dans une direction parallèle à la surface d'incidence plane de l'élément ; et
à sélectionner le faisceau diffracté obtenu dans une partie appropriée du diagramme de rayonnement en champ lointain.

2. Procédé selon la revendication 1, caractérisé en ce que la cavité est subdivisée de façon à former un groupement de cellules ou de tubes (16) (17), dont certains contiennent l'espèce moléculaire considérée, afin de former le profil d'espèce variant spatialement.

3. Procédé selon la revendication 1, caractérisé en ce que le profil d'espèce variant spatialement est maintenu par une onde de pression stationnaire créée de façon à définir un groupement de moyens interrompant et transmettant le rayonnement.

**4.** Procédé selon la revendication 3, <u>caractérisé en ce que</u> l'onde de pression stationnaire est produite par un transducteur à ultrasons.

**5.** Procédé selon l'une quelconque des revendications précédentes, caractérisé en ce que le faisceau lumineux est sélectionné à partir du diagramme de rayonnement en champ lointain par des moyens à filtre spatial.

**6.** Procédé selon la revendication 5, <u>caractérisé en ce que</u> les moyens à filtre spatial comprennent un petit trou pratiqué dans un écran ou une fibre optique ou un faisceau de fibres.

**7.** Procédé selon l'une quelconque des revendications précédentes, <u>caractérisé en ce que</u> la lumière provenant des sources (42) à large bande est collimatée au moyen d'une lentille (44) et est dirigée sur l'élément (10) diffractant.

**8.** Procédé selon l'une quelconque des revendications précédentes, <u>caractérisé en ce que</u> le diagramme de rayonnement en champ lointain est formé à une distance relativement faible de l'élément (10) diffractant au moyen d'une lentille (48) de focalisation.

**9.** Procédé selon l'une quelconque des revendications précédentes, <u>caractérisé en ce que</u> les caractéristiques du faisceau de sortie sont amenées à varier en appliquant un champ magnétique ou un champ électrique variable à travers l'élément (10) diffractant et/ou en faisant varier la température et/ou la pression et/ou la concentration du ou des gaz.

**10.** Procédé de détection optique d'une espèce moléculaire gazeuse ou d'un mélange d'espèces dans un échantillon gazeux, <u>caractérisé par</u> les étapes qui consistent :

à introduire l'espèce gazeuse étudiée dans une cellule d'essai d'échantillon ;
à générer un faisceau lumineux ayant une caractéristique spectrale en longueur d'onde de l'espèce ou du mélange d'espèces gazeuses moléculaires, ledit faisceau lumineux étant produit par le procédé selon l'une quelconque des revendications 1 à 9 ;
à diriger ledit faisceau lumineux à travers ledit échantillon ; et
à observer l'atténuation du faisceau lumineux après qu'il est passé à travers l'échantillon.

**11.** Procédé selon la revendication 10, <u>caractérisé en ce que</u> la concentration de l'espèce moléculaire dans l'échantillon est déterminée en mesurant l'atténuation du faisceau lumineux.

**12.** Procédé selon la revendication 10 ou la revendication 11, <u>caractérisé en ce que</u> le faisceau lumineux généré est commuté entre au moins deux sorties à partir du faisceau lumineux diffracté par des moyens mécaniques, optiques ou électro-optiques, afin d'établir une distinction entre l'effet d'une espèce moléculaire dans une cellule d'échantillon et d'autres effets optiques par des procédés de référence.

**13.** Procédé selon l'une quelconque des revendications 10 à 12, <u>caractérisé en outre par</u> les étapes consistant à faire varier l'intensité et/ou la pureté spectrale du rayonnement source.

**14.** Procédé selon l'une quelconque des revendications 10 à 13, <u>caractérisé en ce que</u> l'élément diffractant est monté sur des moyens oscillants ou tournants de telle façon que, lors de l'utilisation, l'ordre de diffraction sélectionné par le filtre optique ait un niveau de ressemblance variable avec des spectres d'espèces moléculaires souhaités.

**15.** Procédé selon l'une quelconque des revendications 10 à 14, pour détecter optiquement un certain nombre d'espèces moléculaires gazeuses, <u>caractérisé par</u> l'utilisation d'espèces gazeuses différentes à l'intérieur de l'élément diffractant.

**16.** Procédé de détection optique d'un certain nombre d'espèces moléculaires gazeuses selon la revendication 15, <u>caractérisé en outre par</u> l'utilisation d'un certain nombre d'éléments (10) diffractants différents en association avec des filtres spatiaux appropriés.

**17.** Procédé selon l'une quelconque des revendications 12 à 16, <u>caractérisé en ce que</u> la lumière diffractée est modulée en appliquant un champ magnétique ou électrique variable à travers l'élément (10) diffractant et/ou en faisant varier la température et/ou la pression et/ou la concentration du ou des gaz.

**18.** Procédé selon l'une quelconque des revendications 10 à 17, <u>caractérisé en outre par</u> l'utilisation d'un élément réfléchissant derrière l'élément diffractant de façon que la lumière soit réfléchie vers l'arrière à travers l'élément (10) diffractant, dans lequel une lentille unique est utilisée pour collimater la lumière provenant de la source et pour focaliser le rayonnement diffracté sur le filtre optique.

**19.** Procédé selon la revendication 2 ou l'une quelconque des revendications précédentes lorsqu'elles dépendent de la revendication 2, <u>caractérisé en ce que</u> des parois situées entre les cellules individuelles (16, 17) de l'élément (10) diffractant sont réfléchissantes de telle façon que la longueur apparente du chemin de la lumière passant à travers chaque cellule soit augmentée par des réflexions internes.

fig 1

fig 2

$I_{or+nr}$

$I_{nr}$

$I_r$

10

16

17

fig 3

$I_{or+nr}$

$I_{nr}$

$I_r$

10

16

17

fig 4

fig 5